# EUROPEAN PATENT SPECIFICATION

(11) **EP 2 817 226 B1**
(45) Date of publication and mention of the grant of the patent: **19.10.2016**
(21) Application number: 13710055.8
(22) Date of filing: 09.01.2013
(51) Int. Cl.: B65B 31/02, B65B 29/08, B65B 25/22, A47J 27/10, B29C 65/00

(54) **VACUUM PACKAGING MACHINE WITH REMOVABLE INTERNAL AND LOW-TEMPERATURE "SOUS VIDE" COOKING CHAMBER**
VAKUUMVERPACKUNGSMASCHINE MIT HERAUSNEHMBARER INNERER NIEDERTEMPERARTUR-VAKUUMGARKAMMER
MACHINE D'EMBALLAGE SOUS VIDE AVEC CHAMBRE DE CUISSON À BASSE TEMPÉRATURE SOUS VIDE, INTERNE ET AMOVIBLE

(30) Priority: 23.02.2012 IT TO20120159
(43) Date of publication of application: 31.12.2014
(73) Proprietor: Mini Pack-Torre S.p.A., 24044 Dalmine (BG) (IT)
(72) Inventor: TORRE, FABIO EMANUELE, I-24044 Dalmine (BG) (IT)
(74) Representative: Garavelli, Paolo
(86) International application number: PCT/IT2013/000006
(87) International publication number: WO 2013/124872

(56) References cited:
- EP-A2- 1 925 556
- WO-A2-2011/031306
- DE-U- 1 896 433
- US-A1- 2003 159 405

## Description

The present invention refers to a vacuum packaging machine with removable internal and low-temperature "sous vide (vacuum)" cooking chamber, particularly aimed to be used in professional or house kitchens as help in storing and preparing foods. Vacuum packaging machines with internal chamber are known in the art (for example, EP-A-1925556 and WO-A2-2011/031306): in general, packaging through such machines occurs by inserting the product to be packaged inside a bag made of plastic material or a suitable container for vacuum packaging, and placing the bag containing the product inside a decompression chamber composed of a tank and an oscillating bell comprising elements suitable for welding the bag or the container and for keeping vacuum inside such tank. Such known packaging machines with internal chamber however have the following problems, that make it extremely difficult, if not impossible, to use them in professional or house kitchens as help in storing and preparing foods:
- excessive overall sizes and weight;
- the internal chamber requires ribs and great thickness to oppose the depression that is created inside the machine during its cycle;
- the internal chamber is fastened to the machine body, and cannot be removed for a deep cleaning;
- costs are relatively high if compared with current technology of vacuum machines with external suction mainly used in house kitchens;
- vacuum machines with external suction require embossed bags that are more costly than smooth bags;
- vacuum machines with external suction do not allow packaging liquid products;
- vacuum machines with external suction do not allow arriving at residual pressures lower than 100 mBar;
- moreover, vacuum machines with external suction do not allow cooking foods with the "sous vide" (vacuum) technique.

Therefore, object of the present invention is vacuum packaging machine with removable internal and low-temperature "sous vide" cooking chamber, aimed in particular to be used in professional or house kitchens as help in storing and preparing foods.

Another object of the present invention is providing a vacuum packaging machine with removable internal and low-temperature "sous vide" cooking chamber, with reduced sizes and weights, that allow its use also in professional or house kitchens in short spaces.

Moreover, an object of the present invention is providing a vacuum packaging machine with removable internal and low-temperature cooking chamber that is more versatile with respect to prior known machines, able to allow its user to use standard smooth bags present on the market and be also able to package liquid products.

Another object of the present invention is providing a vacuum packaging machine with removable internal and low-temperature "sous vide" cooking chamber that allows preparing cooked plates through the known "sous vide" technique through the use of suitable bags. suitable bags.

Moreover, an object of the present invention is providing a vacuum packaging machine with removable internal and low-temperature "sous vide" cooking chamber that allows packaging one or more bags in a single cycle with the same welding bar.

Another object of the present invention is providing a vacuum packaging machine with removable internal and low-temperature "sous vide" cooking chamber in which the internal tank is more efficient in terms of resistance to external pressure, thereby allowing relatively low thicknesses and reduced manufacturing costs.

Moreover, an object of the present invention is providing a vacuum packaging machine with removable internal and low-temperature "sous vide" cooking chamber that allows using suitable containers adapted to be inserted into the internal chamber and to keep vacuum therein.

The above and other objects and advantages of the invention, as will appear from the following description, are obtained with a vacuum packaging machine with removable internal and low-temperature "sous vide" cooking chamber as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could me made to what is described, without departing from the scope of the invention as appears from the enclosed claims.

The present invention will be better described by some preferred embodiments thereof, provided as a non-limiting example, with reference to the enclosed drawings, in which:

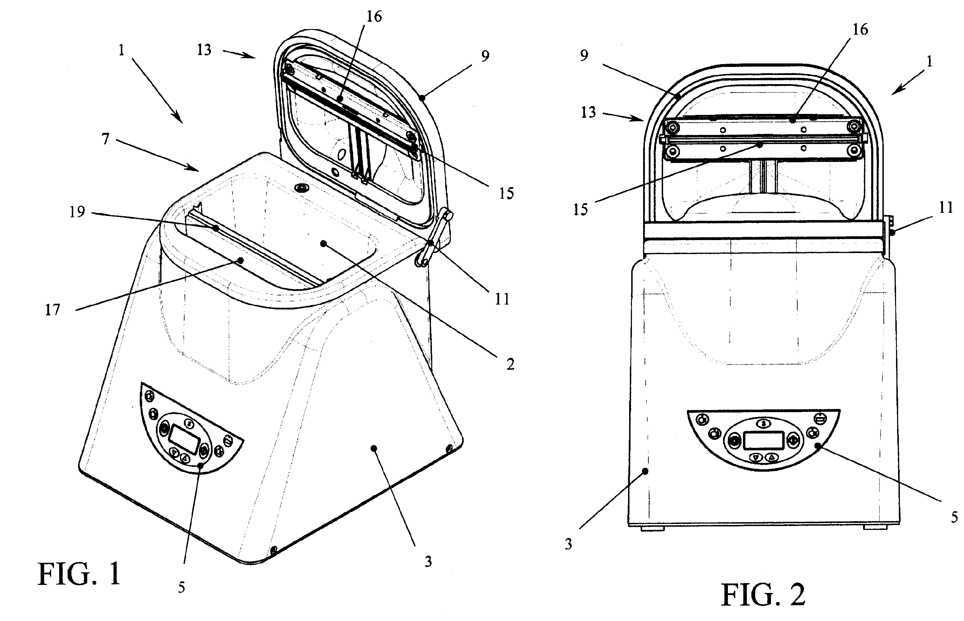

- Figure 1 shows a front perspective view of a preferred embodiment of the machine with internal chamber according to the present invention;
- Figure 2 shows a front view of the machine of Figure 1;

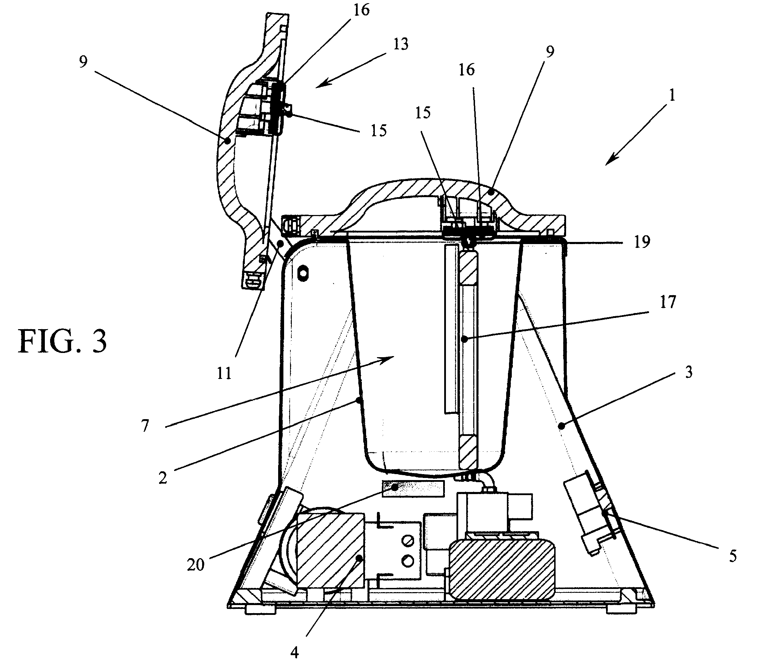

- Figure 3 shows a sectional view of the machine of Figure 1 with closed and open cover;
- Figures 4a, 4b, 4c and 4d show different steps of the extraction of the internal tank of the machine of Figure 1;

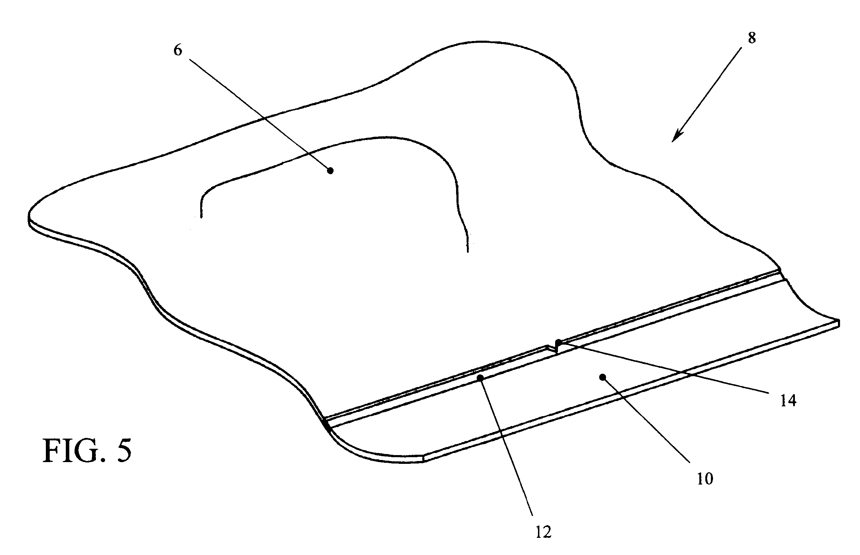

- Figure 5 shows an air-tightly sealed bag containing the product vacuum packaged through the machine according to the present invention.

Herein below in the description, due to obvious conciseness reasons, all structural and operating details of the machine 1 that are known and belonging to the state of the art, will not be described.

With reference to the Figures, it is possible to note that the machine 1 according to the present invention is composed of a supporting and containing structure 3, obviously adapted to contain therein all functional members 4 of the machine 1 itself, that are substantially known in the art, and possibly to externally support at least one command and control board 5 for the operation of the machine 1, such supporting and containing structure 3 comprising at least one decompression chamber 7 for packaging and/or vacuum cooking a product 6, for example inside at least one bag 8 made of plastic material or another suitable container, such chamber 7 being composed of at least one tank 2 adapted to be closed by at least one cover 9. Obviously, the functional members comprise at least one vacuum pump adapted to suck, once having closed the tank 2 with the cover 9, air contained in the chamber 7 to create vacuum therein.

The cover 9 is equipped with a welding system 13 composed of at least one welding bar 15 and at least one membrane system 16 to create the necessary pressure adapted to guarantee an air-tight welding 12 onto the bag 8 made of plastic material. Obviously, the welding bar 15 and the membrane system 16 are electrically and pneumatically connected to the functional members 4 of the machine 1 according to the present invention. Moreover, the machine 1 according to the present invention comprises at least one cross-member, preferably made as at least one bulkhead 17, adapted to be inserted, in case of a bulkhead 17 preferably in a substantially vertical position, inside the tank 2 of the chamber 7, such cross-member being equipped with at least one abutment bar 19. Preferably, such abutment bar 19 is arranged over such cross-member or such bulkhead 17.

The welding imprint 12 therefore occurs due to the pressure exerted by the membrane system joined to the temperature reached by the welding bar 15 through a pulse electronically controlled by the functional members 4.

Advantageously, the bag 8 is of the smooth and not embossed type: in such a way, the use of the machine 1 according to the present invention is more versatile, since it allows the user to employ standard bags that can be found everywhere, and therefore the packaging cost has a limited incidence.

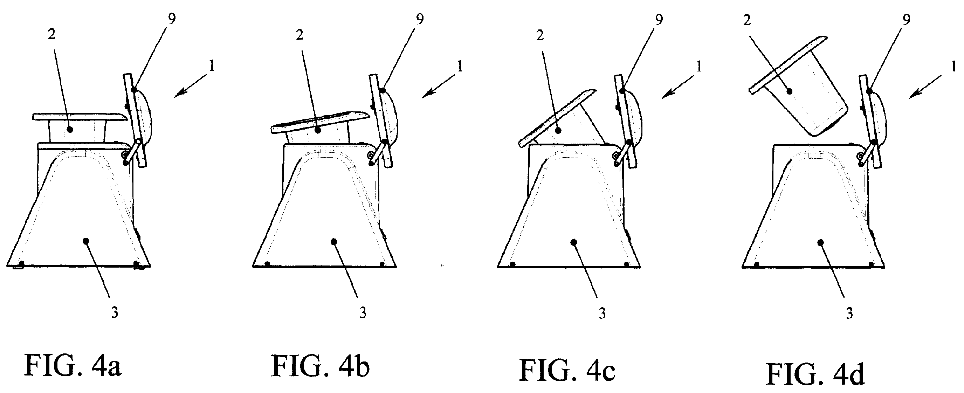

The cover 9 is, preferably, of the oscillating type and is connected to the supporting and containing structure 3 through suitable hinge-type kinematisms 11. In addition, as it is possible to note in particular in Figures 4a to 4d, the tank 2 can be extracted from the supporting and containing structure 3, for example to allow cleaning and washing it.

Preferably, the supporting and containing structure 3 of the machine 1 according to the present invention is made of moulded or thermoformed plastic material, while the tank 2 can also be made of plastic material or of AISI 304 steel.

In order to vacuum package a product 6 placed inside the bag 8 through the machine 1 according to the present invention it is therefore enough to proceed as follows:
- inserting the bag 8 vertically inside the tank 2 by bending the edge 10 of the bag itself onto the abutment bar 19 of the cross-member, and in particular of the bulkhead 17: if the product 6 is not very big, another bag 8 can be placed thereon, containing another product 6, bending in the same way the edge 10 thereof on the abutment bar 19;
- closing the cover 9 on the tank 2 thereby making the decompression chamber 7: the machine 1 is therefore ready to be started with its vacuum cycle: once having set the operating parameters of the machine 1 through the command and control board 5 (such as welding time, vacuum percentage, number of previously saved program, vacuum function for rigid containers, etc.), the vacuum cycle is activated. During this step, the vacuum pump inside the machine is activated and consequently air inside the chamber 7, and therefore inside the bag 8, is sucked, preferably reaching a limit value of residual pressure that is lower than 100 mBar. Once having reached the preset value (controlled, for example, by a suitable pressure sensor connected with the chamber 7 interior), the functional members 4 take care of opening a solenoid valve, pneumatically connected to the membrane system 16, which, being at the atmospheric pressure (therefore higher than the pressure inside the chamber 7) presses the welding bar 15 onto the edge/s 10 of the bag/e 8 supported by the abutment bar 19. Simultaneously, an electric pulse is activated to the welding bar, that lasts for the necessary time preset through the board 5 adapted to melt and weld the different layers of the bag 8, creating an air-tight welding 12 thereof. Once having welded the bag 8, the cycle is completed by activating another solenoid valve, whose purpose is taking back the pressure inside the chamber 7 to atmospheric values, allowing to open the cover 9 and extract the vacuum packaged product/s 6.

If instead it is necessary to package the product inside known containers suitable to keep vacuum therein, one or more of such containers can be directly inserted inside the chamber 7: in such a way, it is possible to provide that the cross-member, and in particular the bulkhead 17, can be extracted from the tank 2 in order to increase the internal sizes of the chamber 7 itself. Afterwards, previously described.

In addition, in order to allow a "sous vide" cooking of the product 6 contained inside the bag 8 made of plastic material or other suitable container and placed inside the chamber 7, the machine 1 according to the present invention further comprises low-temperature or "sous vide" cooking means (< 100°C), preferably of the induction type, adapted to heat and mix water placed inside the tank 7 containing the packaged product.

Another example, which is not part of the invention, is steam cooking through the use of a microwave oven, since, for such purpose, the welding bar 15 comprises on its surface at least one notch (not shown) adapted to make along the welding imprint 12 obtained by the bar 15 itself onto the bag 8, at least one cutting point 14 having lower resistance: in this way, when the known cooking technique of the microwave is used to cook foods packaged with the machine 1 through the microwave cooking means, the pressure generated by evaporating the liquids inside the bag 8 breaks the welding imprint 12 next to the cutting point 14, that therefore operates as release valve of the excess steam. Foods are thereby cooked by steam inside the bag 8, that gradually goes out during the cooking step from the cutting point 14, avoiding risks of uncontrolled breakages of the bag 8 itself.

The machine 1 with vacuum packaging and "sous vide" cooking internal chamber according to the present invention, due in particular to its vertically positioning system of the bag 8 containing the product 6 inside the chamber 7 and to the welding and membrane systems embedded into the cover 9, occupies reduced spaces, that enable its use also in home kitchens as help in storing and preparing foods.

## Claims

1. Vacuum packaging machine (1), wherein the machine (1) is composed of a supporting and containing structure (3) comprising at least one decompression chamber (7) for vacuum packaging a product (6) inside at least one bag (8) or another suitable container placed in a vertical position, said chamber (7) being composed of at least one tank (2) adapted to be closed by at least one cover (9), said cover (9) being equipped with a welding system (13) composed of at least one welding bar (15) and at least one membrane system (16),
said tank (2) comprising at least one cross-member, said cross-member being equipped with at least one abutment bar (19), said abutment bar (19) being adapted to be pressed against said welding bar (15),
**characterised in that** said decompression chamber (7) is adapted for cooking said product (6) contained inside said bag (8) or said container and placed inside said chamber (7), and **in that** said cross-member is adapted to be extracted from said tank(2) in order to increase the internal sizes of the chamber (7), **in that** said tank (2) is adapted to be extracted from said supporting and containing structure (3), and **in that** it comprises low-temperature cooking means (20) adapted to heat and mix water placed inside said chamber (7) in order to perform a "sous vide" cooking of said product (6).

2. Machine (1) according to claim 1, **characterised in that** said cross-member is a bulkhead (17) equipped on its top with said abutment bar (19).

3. Machine (1) according to claim 1, **characterised in that** said cover (9) is of an oscillating type and is connected to said supporting and containing structure (3) through hinge-type kinematisms (11).

4. Machine (1) according to claim 1, **characterised in that** said supporting and containing structure (3) is made of a moulded or thermoformed plastic material and/or said tank (2) is made of plastic material or AISI 304 steel.

5. Machine (1) according to claim 2 **characterised in that** said bulkhead (17) is adapted to be extracted from said tank (2).

6. Machine (1) according to claim 1, **characterised in that** said welding bar (15) comprises on its surface at least one notch adapted to obtain, along a welding imprint (12) performed by said welding bar (15) onto said bag (8), at least one cutting point (14) with lower resistance.

## Patentansprüche

1. Vakuumverpackungsmaschine (1), in der die Maschine (1) aus einer Stütz- und Aufnahmestruktur (3) besteht und mindestens eine Dekompressionskammer (7) für eine Vakuumverpackung eines Produkts (6) in mindestens einem Beutel (8) oder einem anderen angemessenen Behälter in vertikaler Position einschließt, die genannte Kammer (7) besteht aus mindestens einer Wanne (2) die dazu dient, von mindestens einem Deckel (9) geschlossen zu werden, der genannte Deckel (9) ist mit einem Schweißsystem (13) ausgestattet, das aus mindestens einer Schweißstange (15) und mindestens einem Membransystem (16) besteht,
Die genannte Wanne (2) schließt mindestens einen Querträger ein, der genannte Querträger ist mit mindestens einer Kontraststange (19) ausgestattet, die genannte Kontraststange (19) dient dazu, an die genannte Schweißstange (15) gedrückt zu werden,
und ist **dadurch gekennzeichnet, dass** die genannte Dekompressionskammer (7) zum Garen des genannten Produkts (6) dient, das im genannten Beutel (8) oder im genannten Behälter enthalten und in der genannten Kammer (7) untergebracht ist,
sowie dadurch, dass der genannte Querträger dazu dient, aus der genannten Wanne (2) entnommen zu werden, um die Innenabmessungen der Kammer (7) zu erhöhen,
und dadurch, dass die genannte Wanne (2) dazu dient, aus der genannten Stütz- und Aufnahmestruktur (3) entnommen zu werden, und dadurch, dass sie Garvorrichtungen mit niedriger Temperatur (20) enthält, die dazu dienen, das Wasser zu erhitzen und zu mischen, das in die genannte Kammer (7) eingeführt wird, um das genannte Produkt (6) "Sous-Vide" zu garen.

2. Maschine (1) gemäß Patentanspruch 1, die **dadurch gekennzeichnet ist, dass** der genannte Querträger eine Trennwand (17) ist, die oben mit der genannten Kontraststange (19) ausgestattet ist.

3. Maschine (1) gemäß Patentanspruch 1, die **dadurch gekennzeichnet ist, dass** der genannte Deckel (9) ein Schwenkdeckel ist und mit der genannten Stütz- und Aufnahmestruktur (3) durch Scharnierkinematik (11) verbunden ist.

4. Maschine (1) gemäß Patentanspruch 1, die **dadurch gekennzeichnet ist, dass** die genannte Stütz- und Aufnahmestruktur (3) aus geformtem oder thermogeformtem Kunststoff und/oder dass die genannte Wanne (2) aus Kunststoff oder Stahl AISI 304 hergestellt wurde.

5. Maschine (1) gemäß Patentanspruch 2, die **dadurch gekennzeichnet ist, dass** die genannte Trennwand (17) aus der genannten Wanne (2) entnommen werden kann.

6. Maschine (1) gemäß Patentanspruch 1, die **dadurch gekennzeichnet ist, dass** die genannte Schweißstange (15) oberflächlich mindestens eine Kerbe einschließt, die dazu dient, längs eines Schweißabdrucks (12), der durch die genannte Schweißstange (15) ausgeführt wird, am genannten Beutel (8) mindestens einen Kerbpunkt (14) mit geringerem Widerstand auszuführen.

## Revendications

1. Conditionneuse sous vide (1) composée d'une structure de support et de retenue (3) constituée au moins d'une chambre de décompression (7) pour le conditionnement sous vide d'un produit (6) à l'intérieur au moins d'une enveloppe (8) ou d'un autre récipient approprié en position verticale ; la chambre (7) est composée au moins d'une cuve (2) apte à être fermée par un couvercle (9) qui est doté d'un système de soudage (13) constitué d'une barre soudante (15) et d'un système à membrane (16) au moins,
la cuve (2) comprend au moins une traverse qui est dotée d'une barre de contraste (19), cette dernière (19) est apte à être enfoncée contre la barre soudante (15),
**caractérisée en ce que** la chambre de décompression (7) est apte à la cuisson du produit (6) contenu dans l'enveloppe (8) ou dans le récipient qui se trouve à l'intérieur de la chambre (7),
**en ce que** la cuve (2) est apte à être extraite de la structure de support et de retenue (3), et **en ce qu'**elle comprend des moyens de cuisson à faible température (20) aptes à chauffer et mélanger l'air présent dans la chambre (7) afin de cuire "sous vide" le produit (6).

2. Machine (1), selon la revendication 1, **caractérisée en ce que** la traverse est une cloison (17) dotée en haut de la barre de contraste (19).

3. Machine (1), selon la revendication 1, **caractérisée en ce que** le couvercle (9) est du type basculant et qu'il est relié à la structure de support et de retenue (3) par des cinématismes à charnière (11).

4. Machine (1), selon la revendication 1, **caractérisée en ce que** la structure de support ou de retenue (3) est en matière plastique imprimée ou thermoformée et/ou la cuve (2) est en matière plastique ou en acier AISI 304.

5. Machine (1), selon la revendication 2, **caractérisée en ce que** la cloison (17) peut être extraite de la cuve (2).

6. Machine (1), selon la revendication 1, **caractérisée en ce que** la barre soudante (15) comprend, à la surface, au moins une entaille apte à réaliser au moins un point de coupure (14) de résistance mineure, le long de l'empreinte d'une soudure (12) exécutée par la barre soudante (15) sur l'enveloppe (8).
